# EUROPÄISCHE PATENTSCHRIFT

(11) **EP 4 141 229 B1**
(45) Veröffentlichungstag und Bekanntmachung des Hinweises auf die Patenterteilung: **10.04.2024**
(21) Anmeldenummer: 22187407.6
(22) Anmeldetag: 28.07.2022
(51) Int. Cl.: F01N 3/20

(54) **ABGASHEIZER UND VERFAHREN ZUR HERSTELLUNG EINES ABGASHEIZERS**
EXHAUST GAS HEATER AND METHOD FOR PRODUCING AN EXHAUST GAS HEATER
CHAUFFAGE À GAZ D'ÉCHAPPEMENT ET PROCÉDÉ DE FABRICATION D'UN CHAUFFAGE À GAZ D'ÉCHAPPEMENT

(30) Priorität: 26.08.2021 DE 102021122082
(43) Veröffentlichungstag der Anmeldung: 01.03.2023
(73) Patentinhaber: Purem GmbH, 66539 Neunkirchen (DE)
(72) Erfinder: Hammer, Jochen, Stuttgart (DE); Frobenius, Fabian, Stuttgart (DE); Brenner, Holger, Stuttgart (DE); Kuschel, Dietmar, Murr (DE); Uysal, Fatih, Plochingen (DE); Häberle, Jürgen, Stuttgart (DE)
(74) Vertreter: Ruttensperger Lachnit Trossin Gomoll

(56) Entgegenhaltungen:
- EP-A1- 4 047 195
- DE-U1-202021 102 620
- JP-A- 2002 295 236

## Beschreibung

Die vorliegende Erfindung betrifft einen Abgasheizer, mit welchem in einer Abgasanlage eines Kraftfahrzeugs Wärme auf das darin strömende, von einer Brennkraftmaschine ausgestoßene Abgas übertragen werden kann, um dadurch insbesondere in einer Startphase des Betriebs einer Brennkraftmaschine stromabwärts bezüglich des Abgasheizers angeordnete Systembereiche, wie zum Beispiel Katalysatoren oder Partikelfilter, schneller auf Betriebstemperatur zu bringen.

Aus der nachveröffentlichten deutschen Patentanmeldung DE 10 2021 109 568 ist ein Abgasheizer bekannt, bei welchem zwischen zwei aus Blechmaterial aufgebauten, im Wesentlichen plattenartigen Trägerelementen einer Trägeranordnung zwei durch Heraustrennen aus einem Flachmaterial bereitgestellte, im Wesentlichen plattenartig bzw. flächig ausgebildete Heizleiter einer Heizleiteranordnung in einer einer Abgasheizer-Längsrichtung entsprechenden Abgas-Hauptströmungsrichtung aufeinander folgend angeordnet sind. Durch eine Verbindungsanordnung mit einer Mehrzahl von bolzenartig ausgebildeten Verbindungselementen ist der geschichtete Aufbau von Trägerelementen und dazwischen angeordneten Heizleitern zusammengehalten. Um eine elektrische Isolierung der Heizleiter bezüglich der Trägerelemente bzw. auch bezüglich einander zu erreichen, sind zwischen diesen jeweils mehrere Abstützeinheiten aus elektrisch isolierendem Material, beispielsweise Keramikmaterial, angeordnet. Der geschichtete Aufbau aus Trägerelementen, Heizleitern und dazwischen angeordneten Abstützeinheiten ist durch die Verbindungselemente der Verbindungsanordnung zusammengehalten.

Ein Abgasheizer gemäß dem Oberbegriff des Anspruchs 1 ist aus der DE 20 2021 102 620 U1 bekannt. Bei diesem Abgasheizer ist ein mit elektrisch leitendem Material aufgebauter Heizleiter vermittels einer Verbindungsanordnung an einer plattenartigen Trägeranordnung getragen. Die Verbindungsanordnung umfasst zwei den Heizleiter an seiner stromaufwärtigen Seite und seiner stromabwärtigen Seite übergreifende, aus elektrisch isolierendem Material aufgebaute Klemmteile, die, den Heizleiter zwischen sich aufnehmend und klemmend, vermittels mehrerer jeweils einen Schaft aufweisender Verbindungselemente der Verbindungsanordnung an einem plattenartigen Träger der Trägeranordnung festgelegt sind.

Es ist die Aufgabe der vorliegenden Erfindung, einen Abgasheizer und ein Verfahren zur Herstellung eines derartigen Abgasheizer bereitzustellen, mit welchen eine stabile elektrisch isolierte Halterung der Heizleiteranordnung an der Trägeranordnung gewährleistet werden kann.

Erfindungsgemäß wird diese Aufgabe gelöst durch einen Abgasheizer für eine Abgasanlage einer Brennkraftmaschine, umfassend:
- eine Trägeranordnung,
- eine an der Trägeranordnung getragene Heizleiteranordnung mit wenigstens einem stromdurchflossenen Heizleiter,
- eine Verbindungsanordnung zur festen Verbindung der Heizleiteranordnung mit der Trägeranordnung, wobei die Heizleiteranordnung vermittels der Verbindungsanordnung an der Trägeranordnung elektrisch isoliert getragen ist,
wobei die Verbindungsanordnung eine Mehrzahl von Verbindungselementen umfasst, wobei die Heizleiteranordnung an wenigstens einem Verbindungselement vermittels einer Isolierträgereinheit bezüglich des wenigstens einen Verbindungselements elektrisch isoliert getragen ist.

Bei einem erfindungsgemäß aufgebauten Abgasheizer ist die definierte Halterung der Heizleiteranordnung an der Trägeranordnung nicht durch axial bezüglich einer Abgasheizer-Längsachse zwischen der Trägeranordnung und der Heizleiteranordnung wirkende Abstützelemente erreicht, sondern durch eine elektrische isolierte Halterung der Heizleiteranordnung an wenigstens einem Verbindungselement der Verbindungsanordnung, welches wiederum in fester Verbindung mit der Trägeranordnung ist.

Es ist in diesem Zusammenhang darauf hinzuweisen, dass zum Erhöhen der Stabilität vorzugsweise mehrere, am meisten bevorzugt alle Verbindungselemente der Verbindungsanordnung zum Bereitstellen einer derartigen Trägerfunktion für die Heizleiteranordnung genutzt werden können.

Diese Tragewirkung der Verbindungsanordnung wird dadurch bereitgestellt, dass das wenigstens eine Verbindungselement einen Schaft umfasst, und dass die Isolierträgereinheit eine den Schaft umgebende Trägerhülse und die Trägerhülse an dem Schaft tragendes Isoliermaterial umfasst.

Der feste Verbund der Heizleiteranordnung mit der Verbindungsanordnung wird dadurch bereitgestellt, dass die Heizleiteranordnung wenigstens einen mit wenigstens einer Trägerhülse fest verbundenen Heizleiter umfasst. Beispielsweise kann hierzu der wenigstens eine Heizleiter mit jeder Trägerhülse durch Materialschluss, vorzugsweise Verschweißen oder Verlöten, fest verbunden sein.

Für eine hohe Heizleistung kann die Heizleiteranordnung eine Mehrzahl von in Richtung einer Abgasheizer-Längsachse aufeinander folgend mit Abstand zueinander angeordneten Heizleitern umfassen. Jeder dieser Heizleiter kann mit wenigstens einer, vorzugsweise jeder Trägerhülse fest verbunden sein.

Zum Erhalt einer stabilen Tragefunktion durch das Isoliermaterial kann dieses eine materialschlüssige Verbindung mit dem Schaft und der Trägerhülse bereitstellen.

Um diesen Materialschluss sowohl zum Schaft, als auch zur Trägerhülse zu erreichen, kann das Isoliermaterial in fließfähigem Zustand in einen zwischen dem Schaft und der Trägerhülse gebildeten Zwischenraum eingebracht sein. Hierzu kann beispielsweise das Isoliermaterial Glaskeramik-Material umfassen, das in aufgeschmolzem Zustand in den Zwischenraum eingegossen wird. Durch das in fließfähigem Zustand eingebrachte und dann aushärtende Isoliermaterial wird ein insbesondere gegen das Eindringen von Feuchtigkeit resistenter Aufbau der Isolierträgereinheiten erreicht.

Bei einer alternativen Ausgestaltung kann das Isoliermaterial eine kraftschlüssige Verbindung, also eine Verbindung durch Reibschluss, mit dem Schaft und der Trägerhülse bereitstellen.

Hierzu kann das Isoliermaterial durch Einpressen in einen zwischen dem Schaft und der Trägerhülse gebildeten Zwischenraum eingebracht werden. Beispielweise kann dabei das Isoliermaterial gepresstes Pulvermaterial, vorzugsweise Magnesiumoxid-Material, oder gepresstes Fasermaterial, vorzugsweise Glasfasermatten-Material, umfassen.

Für einen stabilen Aufbau des Abgasheizers kann die Trägeranordnung zwei in Richtung der Abgasheizer-Längsachse in Abstand zueinander angeordnete, die Heizleiteranordnung zwischen sich aufnehmende Trägerelemente umfassen, und die Heizleiteranordnung kann vermittels der Verbindungsanordnung in axialem Abstand zu jedem der Trägerelemente an der Trägeranordnung getragen sein.

Um dabei einen elektrischen Kurzschluss über die bzw. jede im Allgemeinen mit Metallmaterial aufgebaute Trägerhülse zu vermeiden, wird vorgeschlagen, dass die Trägerhülse in axialem Abstand zu jedem der Trägerelemente angeordnet ist.

Die Erfindung betrifft ferner eine Abgasanlage für eine Brennkraftmaschine, umfassend wenigstens einen erfindungsgemäß aufgebauten Abgasheizer.

Weiter betrifft die Erfindung ein Verfahren zur Herstellung eines erfindungsgemäßen Abgasheizers, umfassend die Maßnahmen:
a) Bereitstellen wenigstens einer Verbindungselement-Trägerhülse-Baugruppe mit einer einen Schaft eines Verbindungselements unter Zwischenlagerung von Isoliermaterial umgebenden und durch das Isoliermaterial an dem Schaft getragenen Trägerhülse,
b) festes Verbinden der Heizleiteranordnung mit der Trägerhülse der wenigstens einen Verbindungselement-Trägerhülse-Baugruppe zum Bereitstellen einer Verbindungsanordnung-Heizleiteranordnung-Baugruppe,
c) Verbinden der Verbindungsanordnung-Heizleiteranordnung-Baugruppe mit der Trägeranordnung.

Um bei der Maßnahme a) die einzelnen Komponenten der herzustellenden Verbindungselement-Trägerhülse-Baugruppen leicht handhaben zu können, wird vorgeschlagen, dass die Maßnahme b) nach der Maßnahme a) durchgeführt wird. Dies bedeutet, dass zunächst die Trägerhülsen mit den zugeordneten Verbindungselementen vermittels des Isoliermaterials fest verbunden werden und danach die Trägerhülsen mit zugeordneten Heizleitern einer jeweiligen Heizleiteranordnung verbunden werden. Bei einer alternativen Vorgehensweise kann die Maßnahme b) vor der Maßnahme a) durchgeführt werden. Dies bedeutet, dass zunächst eine oder mehrere Trägerhülsen mit den zugeordneten Heizleitern einer jeweiligen Heizleiteranordnung verbunden werden und dann in Zuordnung zu jeder derartigen Trägerhülse ein Verbindungselement mit seinem Schaft vermitteltes des Isoliermaterials mit der Trägerhülse elektrisch isoliert verbunden wird. Dabei gehen also die Maßnahmen a) und b) ineinander über bzw. sind ineinander verschachtelt. Die Maßnahme c) wird vorzugsweise erst dann durchgeführt, wenn die Maßnahmen a) und b) durchgeführt worden sind.

Bei der Maßnahme a) kann das Isoliermaterial in fließfähigem Zustand in einen zwischen dem Schaft und der Trägerhülse gebildeten Zwischenraum eingebracht werden. Bei einer alternativen Ausgestaltung kann bei der Maßnahme a) das Isoliermaterial in den zwischen dem Schaft und der Trägerhülse gebildeten Zwischenraum eingepresst werden.

Für einen mechanisch stabilen und gegen die chemische Einwirkung von Abgas resistenten Aufbau wird vorgeschlagen, dass bei der Maßnahme b) wenigstens ein Heizleiter, vorzugsweise eine Mehrzahl von Heizleitern, durch Materialschluss mit der Trägerhülse fest verbunden wird.

Zur festen Anbindung an die Trägeranordnung kann bei der Maßnahme c) der Schaft der wenigstens einen Verbindungselement-Trägerhülse-Baugruppe in wenigstens einem, vorzugsweise jedem in Richtung einer Abgasheizer-Längsachse gelegenen Endbereich mit einem Trägerelement der Trägeranordnung vorzugsweise durch Verschraubung oder/und Materialschluss verbunden werden.

Die vorliegende Erfindung wird nachfolgend mit Bezug auf die beiliegenden Figuren detailliert beschrieben. Es zeigt:
- Fig. 1: eine perspektivische Ansicht eines Abgasheizers;
- Fig. 2: eine Längsschnittansicht des Abgasheizers der Fig. 1;
- Fig. 3: eine Detailansicht der elektrisch isolierten Halterung einer Heizleiteranordnung an einer Trägeranordnung eines Abgasheizers.

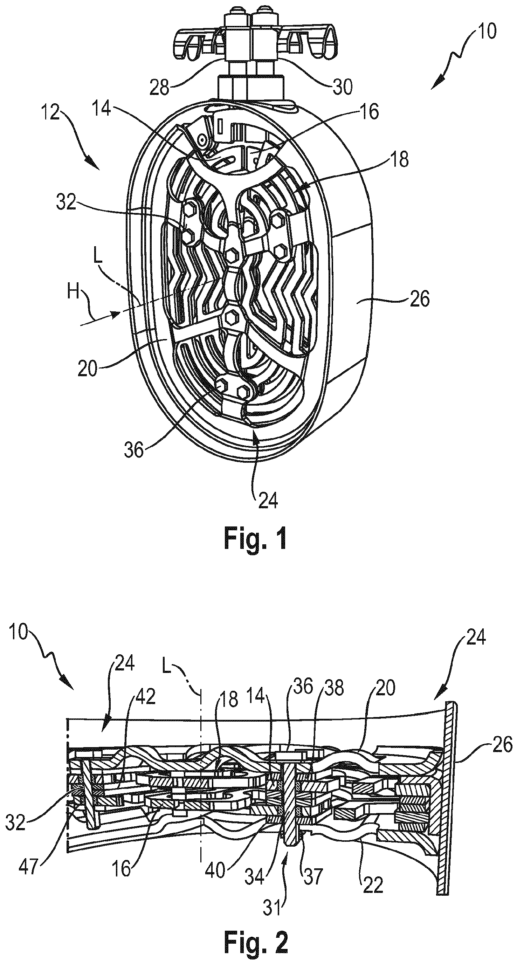

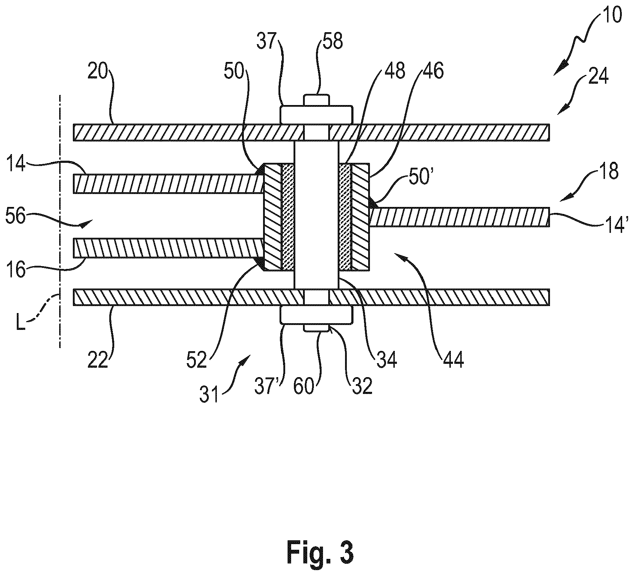

Bevor mit Bezug auf die Fig. 3 die erfindungsgemäße Art und Weise der elektrisch isolierten Halterung einer Heizleiteranordnung an einer Trägeranordnung eines Abgasheizers detailliert beschrieben wird, wird mit Bezug auf die Fig. 1 und 2 der grundsätzliche Aufbau eines derartigen Abgasheizers 10 für eine Abgasanlage 12 einer Brennkraftmaschine, beispielsweise an einem Kraftfahrzeug, beschrieben.

Ein derartiger Abgasheizer 10 ist in der Abgasanlage 12 von Abgas in einer Abgas-Hauptströmungsrichtung H durchströmbar und weist zwei in Richtung einer Abgasheizer-Längsachse L aufeinander folgend angeordnete und somit von im Wesentlichen in der Abgas-Hauptströmungsrichtung H strömendem Abgas nacheinander umströmbare Heizleiter 14, 16 einer allgemein mit 18 bezeichneten Heizleiteranordnung auf. Die Heizleiter 14, 16 sind im Wesentlichen plattenartig bzw. aus Flachmaterial aufgebaut und können mit ihrer mit einer Mehrzahl von in mäanderartiger Struktur verlaufenden Abschnitten bereitgestellten Struktur durch Heraustrennen aus einem Flachmaterialrohling, insbesondere einem Metallrohling, erzeugt werden.

An den in Richtung der Abgasheizer-Längsachse L voneinander abgewandt liegenden Seiten der beiden Heizleiter 14, 16 sind im Wesentlichen plattenartig gestaltete Trägerelemente 20, 22 einer allgemein mit 24 bezeichneten Trägeranordnung vorgesehen. An ihrem Außenumfangsbereich sind die plattenartigen Trägerelemente 20, 22 an einem im Wesentlichen zylindrischen Trägergehäuse 26 festgelegt.

Die beiden Heizleiter 14, 16 können zueinander seriell oder parallel geschaltet sein. Zur elektrischen Verbindung mit einer Spannungsquelle sind zwei das Trägergehäuse 26 durchsetzende Anschlusseinheiten 28, 30 vorgesehen, welche in dem von dem Trägergehäuse 26 umgebenen Innenraum mit den Heizleitern 14, 16 elektrisch leitend verbunden sind.

Zum Erhalt eines stabilen Verbundes sind die beiden Trägerelemente 20, 22 und die dazwischen angeordneten, einander unmittelbar benachbart liegenden Heizleiter 14, 16 durch eine Verbindungsanordnung 31 mit einer Mehrzahl von bolzenartig ausgebildeten Verbindungselementen 32 fest miteinander verbunden. Die Verbindungselemente 32 können beispielsweise als Schraubbolzen mit einem Schaft 34 und einem Kopf 36 ausgebildet sein. Auf den Schaft 34 kann beispielsweise ein Mutterelement 37 aufgeschraubt sein, um den geschichteten Aufbau aus Trägerelementen 20, 22 und Heizleitern 14, 16 zwischen dem Kopf 36 und dem Mutterelement 37 einzuspannen.

Um eine elektrische Isolierung der Heizleiter 14, 16 bezüglich der im Allgemeinen aus Metallmaterial aufgebauten Trägerelemente 20, 22 der Trägeranordnung 24 zu erreichen, ist zwischen dem Heizleiterelement 14 und dem Trägerelement 20 beispielsweise in Zuordnung zu jedem Verbindungselement 32 eine mit elektrisch isolierendem Material, beispielsweise Keramikmaterial, aufgebaute, im Wesentlichen plattenartig ausgebildete und von dem zugeordneten Verbindungselement 32 im Bereich einer darin vorgesehenen Öffnung durchsetzte Trägeranordnung-Abstützeinheit 38 vorgesehen. Gleichmaßen ist beispielsweise in Zuordnung zu jedem Verbindungselement 32 eine zwischen dem Heizleiter 16 und dem Trägerelement 22 angeordnete Trägerelement-Abstützeinheit 40 vorgesehen.

Um die beiden nebeneinander liegenden Heizleiter 14, 16 bezüglich einander elektrisch isoliert abzustützen, ist beispielsweise in Zuordnung zu jedem Verbindungselement 32 eine Heizleiter-Abstützeinheit 42 vorgesehen. Auch jede Heizleiter-Abstützeinheit 42 ist im Wesentlichen plattenartig mit einer oder mehreren Scheiben ausgebildet und mit Keramikmaterial aufgebaut. Dort, wo die Heizleiter 14, 16 von dem Verbindungselement 32 durchsetzt sind, sind in die in den Heizleitern 14, 16 gebildeten Öffnungen hülsenartige Isolierelemente 47 eingesetzt, um eine definierte Positionierung des Verbindungselements 32 in den in den Heizleitern 14, 16 vorgesehenen Öffnungen zu erreichen.

Nachfolgend wird mit Bezug auf die Fig. 3 detailliert beschrieben, wie gemäß den Prinzipien der vorliegenden Erfindung in einem Abgasheizer 10 mit dem vorangehend hinsichtlich seiner grundsätzlichen Struktur beschriebenen Aufbau die Heizleiteranordnung 18 vermittels der Verbindungsanordnung 31 bzw. der Verbindungselemente 32 derselben elektrisch isoliert an der Trägeranordnung 24 bzw. den beiden Trägerelementen 20, 22 derselben getragen werden kann, ohne dass hierfür die vorangehend beschriebenen Abstützeinheiten 38, 40, 42 erforderlich sind.

Die Fig. 3 zeigt einen Detailausschnitt des Abgasheizers 10 im Bereich eines Verbindungselements 32 der Verbindungsanordnung 31. Dabei zeigt die Fig. 3 in ihren links bzw. rechts des dargestellten Verbindungselements 32 liegenden Bereichen zwei unterschiedliche Ausgestaltungen der Heizleiteranordnung 18. In dem links des Verbindungselements 32 liegenden Bereich ist eine Heizleiteranordnung 18 mit zwei in Richtung der Abgasheizer-Längsachse L aufeinander folgenden und in Abstand zueinander angeordneten Heizleitern 14, 16 dargestellt. In dem rechts des Verbindungselements 32 liegenden Bereich ist in Fig. 3 eine Heizleiteranordnung 18 mit nur einem einzigen Heizleiter 14' dargestellt. Die Art und Weise, wie die Heizleiteranordnung 18 in nachfolgend beschriebener Art und Weise vermittels der Verbindungsanordnung 32 an der Trägeranordnung 24 bzw. den beiden Trägerelementen 20, 22 derselben getragen ist, ist jedoch unabhängig von der Anzahl an Heizleitern der Heizleiteranordnung 18.

Die Fig. 3 zeigt, dass jeder der Heizleiter 14, 16 bzw. 14' der Heizleiteranordnung 18 an der Trägeranordnung 24 nicht durch eine zwischen den Heizleitern 14, 16 bzw. 14' und den Trägerelementen 20, 22 wirkende Abstützanordnung realisiert ist, sondern dass die Heizleiter 14, 16 bzw. der einzige Heizleiter 14' vermittels einer in Zuordnung zu dem Verbindungselement 32 vorgesehenen Isolierträgereinheit 44 an der Trägeranordnung 24 elektrisch isoliert getragen ist. Es ist darauf hinzuweisen, dass vorzugsweise in Zuordnung zu einer Mehrzahl, am meisten bevorzugt in Zuordnung zu jedem Verbindungselement 32 der Verbindungsanordnung 31 eine derartige einen festen Verbund mit der Heizleiteranordnung 18 herstellende Isolierträgereinheit 44 vorgesehen ist.

Die Isolierträgereinheit 44 umfasst eine den Schaft 34 des als Stufenbolzen ausgebildeten Verbindungselements 32 umgebende Trägerhülse 46. Ein zwischen der ringartig ausgebildeten und den Schaft 34 vorzugsweise in seinem gesamten Umfangsbereich umgebenden Trägerhülse 36 und dem Schaft 34 gebildeter Zwischenraum ist mit Isoliermaterial 48 gefüllt. Das Isoliermaterial 48 erzeugt einen sowohl in radialer Richtung als auch in axialer Richtung festen Verbund des Schafts 34 des Verbindungselements 32 mit der Trägerhülse 46.

Die Heizleiteranordnung 18 bzw. deren Heizleiter 14, 16 bzw. 14' sind mit der Trägerhülse 46 durch Materialschluss, beispielsweise durch in Fig. 3 erkennbare Verschweißungen 50, 52 bzw. 50', fest verbunden. Beispielsweise können die Heizleiter 14, 16 bzw. 14' dort, wo eine derartige feste Verbindung mit der Trägerhülse 46 erzeugt werden soll, eine Öffnung aufweisen, durch welche die Trägerhülse 46 hindurchgeführt wird und dann mit dem jeweiligen Heizleiter 14, 16 bzw. 14' durch eine beispielsweise vollständig umlaufende Schweißnaht oder durch punktuelle Verschweißung verbunden wird.

Da die Trägerhülse 46 derart bemessen bzw. am Schaft 34 des Verbindungselements 32 festgelegt ist, dass diese einen axialen Abstand zu den beiden beispielsweise ebenfalls mit Metallmaterial aufgebauten Trägerelementen 20, 22 aufweist, besteht die Möglichkeit eines elektrischen Kurzschlusses zwischen den Trägerelementen 20, 22 und der Trägerhülse 46 nicht. Über die Isolierträgereinheit 44 und das Verbindungselement 32 bzw. jedes mit einer derartigen Isolierträgereinheit 44 zusammenwirkende Verbindungselement 32 ist somit die Heizleiteranordnung 18 in definierter Positionierung axial zwischen den beiden Trägerelementen 20, 22 der Trägeranordnung 24 gehalten. Zusätzliche Maßnahmen zur axialen Abstützung der Heizleiter 14, 16 bzw. 14' sind nicht erforderlich.

Der feste Verbund der Trägerhülse 46 mit dem Schaft 34 des Verbindungselements 32 kann beispielsweise dadurch erzeugt werden, dass das Isoliermaterial 48 in fließfähigem, beispielsweise aufgeschmolzenem Zustand in den zwischen der Trägerhülse 46 und dem Schaft 34 gebildeten Zwischenraum eingegossen wird. Beispielsweise kann hierzu Glaskeramik-Material genutzt werden, welches nach dem Aushärten sowohl zum Schaft 34 als auch zur Trägerhülse 46 eine adhäsive, materialschlüssige Verbindung bereitstellt.

Bei einer alternativen Ausgestaltung kann das Isoliermaterial 48 durch Einpressen in den zwischen der Trägerhülse 46 und dem Schaft 34 gebildeten Zwischenraum eingebracht werden. Beispielsweise kann hierfür pulverartiges Material, wie z. B. Magnesiumoxid-Material, genutzt werden, welches in den Zwischenraum eingebracht und darin derart verpresst wird, dass ein stabiler Verbund des zunächst pulverartigen Materials in sich und dadurch auch ein Kraftschluss, also ein Reibschluss, bezüglich der Außenumfangsfläche des Schafts 34 und der Innenumfangsfläche der Trägerhülse 46 erzeugt wird. Um diesen Verbund zu stärken, kann in das zunächst pulverartige Isoliermaterial 48 ein dessen strukturellen Zusammenhalt festigendes Haftmittel integriert sein.

Bei einer weiteren alternativen Ausgestaltung kann das Isoliermaterial Fasermaterial, wie z. B. Fasermattenmaterial, umfassen, welches beispielsweise auch genutzt wird, um Katalysatorblöcke in im Wesentlichen rohrartigen Katalysatorgehäusen von Abgasanlagen zu halten. Beispielsweise kann hierzu der Schaft 34 mit Fasermaterial umgeben werden und daraufhin die Trägerhülse 46 auf den mit dem Fasermaterial bzw. dem Fasermattenmaterial umgebenen Schaft 34 aufgeschoben werden, wobei das Fasermaterial gepresst wird und durch Reibschluss den festen Verbund zwischen Schaft 34 und Trägerhülse 46 erzeugt.

Bei der Herstellung eines derartigen Abgasheizers 10 kann beispielsweise derart vorgegangen werden, dass zunächst mit dem bzw. jedem Verbindungselement 32 der Verbindungsanordnung 31 und einer jeweils zugeordneten Trägerhülse 46 eine Verbindungselement-Trägerhülse-Baugruppe 54 dadurch bereitgestellt wird, dass die Trägerhülse 46 am zugeordneten Verbindungselement 32 durch Einbringen des Isoliermaterials 48 in einer der vorangehend beschriebenen Weisen fixiert wird. Die so bereitgestellten Verbindungselement-Trägerhülse-Baugruppen 54 können dann in einem nächsten Verfahrensschritt mit den Heizleitern 14, 16 bzw. 14' der Heizleiteranordnung 18 fest verbunden werden, um auf diese Art und Weise eine Verbindungsanordnung-Heizleiteranordnung-Baugruppe 56 bereitzustellen. Hierzu können die Trägerhülsen 46 der bei einem Abgasheizer 10 vorzusehenden Verbindungselement-Trägerhülse-Baugruppen 54 in der vorangehend beschriebenen Art und Weise mit dem bzw. den Heizleitern der Heizleiteranordnung 18 durch das Erzeugen der Verschweißungen 50, 52 bzw. 50', ggf. in einer alternativen Vorgehensweise durch Verlöten, fest verbunden werden.

Die so hergestellte Verbindungsanordnung-Heizleiteranordnung-Baugruppe 56 kann dann mit den beiden Trägerelementen 20, 22 der Trägeranordnung 24 verbunden werden, indem in den axialen Endbereichen 58, 60 der als Stufenbolzen ausgebildeten Verbindungselemente 32 vorgesehene Gewindeabschnitte durch zugeordnete Öffnungen in den Trägerelementen 20, 22 hindurchgeführt werden und auf diese Gewindeabschnitte dann Mutterelemente 37, 37' aufgeschraubt werden. Alternativ könnten die axialen Endbereiche 58, 60 der Verbindungselemente 32 an den Trägerelementen 20 beispielsweise auch durch Materialschluss, z. B. Verschweißen, festgelegt werden.

Bei einer alternativen Vorgehensweise kann zunächst die Heizleiteranordnung 18 mit der bzw. den Trägerhülsen 46 beispielsweise durch Materialschluss fest verbunden werden. Daraufhin können in die bereits mit den Heizleitern 14, 16 bzw. 14' der Heizleiteranordnung 18 verbundenen Trägerhülsen 46 die zugeordneten Verbindungselemente 32 eingeführt und darin durch das Isoliermaterial 48 fixiert werden. Die Maßnahme zum Bereitstellen einer jeweiligen Verbindungselement-Trägerhülse-Baugruppe 54 wird somit also nach der Maßnahme zum Verbinden der Heizleiteranordnung 18 mit der bzw. den Trägerhülsen 46. Die Maßnahme zum Bereitstellen der Verbindungsanordnung-Heizleiteranordnung-Baugruppe 56 erfolgt somit vor bzw. ineinander verschachtelt mit der Maßnahme zum Bereitstellen der Verbindungselement-Trägerhülse-Baugruppe 54.

Mit dem erfindungsgemäß vorgesehenen bzw. vorzusehenden Aufbau eines Abgasheizers wird bei baulich einfacher Ausgestaltung eine zuverlässige elektrisch isolierte Halterung einer Heizleiteranordnung an einer Trägeranordnung eines Abgasheizers realisiert, welche aufgrund der eingesetzten Verbindungen verschiedener Bauteile miteinander mechanisch und thermisch und auch gegen chemische Einflüsse resistent ist.

## Patentansprüche

1. Abgasheizer für eine Abgasanlage einer Brennkraftmaschine, umfassend:
- eine Trägeranordnung (24),
- eine an der Trägeranordnung (24) getragene Heizleiteranordnung (18) mit wenigstens einem stromdurchflossenen Heizleiter (14, 16; 14'),
- eine Verbindungsanordnung (31) zur festen Verbindung der Heizleiteranordnung (18) mit der Trägeranordnung (24), wobei die Heizleiteranordnung (18) vermittels der Verbindungsanordnung (31) an der Trägeranordnung (24) elektrisch isoliert getragen ist,
wobei die Verbindungsanordnung (31) eine Mehrzahl von Verbindungselementen (32) umfasst, wobei die Heizleiteranordnung (18) an wenigstens einem Verbindungselement (32) vermittels einer Isolierträgereinheit (44) bezüglich des wenigstens einen Verbindungselements (32) elektrisch isoliert getragen ist, wobei das wenigstens eine Verbindungselement (32) einen Schaft (34) umfasst,
**dadurch gekennzeichnet, dass** die Isolierträgereinheit (44) eine den Schaft (34) umgebende Trägerhülse (46) und die Trägerhülse an dem Schaft (34) tragendes Isoliermaterial (48) umfasst, und dass die Heizleiteranordnung (18) wenigstens einen mit wenigstens einer Trägerhülse (46) fest verbundenen Heizleiter (14, 16; 14') umfasst.

2. Abgasheizer nach Anspruch 1, **dadurch gekennzeichnet, dass** der wenigstens eine Heizleiter (14, 16; 14') mit jeder Trägerhülse (46) durch Materialschluss, vorzugsweise Verschweißen oder Verlöten, fest verbunden ist.

3. Abgasheizer nach Anspruch 1 oder 2, **dadurch gekennzeichnet, dass** die Heizleiteranordnung (18) eine Mehrzahl von in Richtung einer Abgasheizer-Längsachse (L) aufeinanderfolgend mit Abstand zueinander angeordneten Heizleitern (14, 16) umfasst, und dass jeder Heizleiter (14, 16) mit wenigstens einer, vorzugsweise jeder Trägerhülse fest verbunden ist.

4. Abgasheizer nach einem der Ansprüche 1-3, **dadurch gekennzeichnet, dass** das Isoliermaterial (48) eine materialschlüssige Verbindung mit dem Schaft (34) und der Trägerhülse (46) bereitstellt.

5. Abgasheizer nach einem der Ansprüche 1-4, **dadurch gekennzeichnet, dass** das Isoliermaterial (48) in fließfähigem Zustand in einen zwischen dem Schaft (34) und der Trägerhülse (46) gebildeten Zwischenraum eingebracht ist, oder/und dass das Isoliermaterial (48) Glaskeramik-Material umfasst.

6. Abgasheizer nach einem der Ansprüche 1-3, **dadurch gekennzeichnet, dass** das Isoliermaterial (48) eine kraftschlüssige Verbindung mit dem Schaft (34) und der Trägerhülse bereitstellt.

7. Abgasheizer nach einem der Ansprüche 1-3 oder 6, **dadurch gekennzeichnet, dass** das Isoliermaterial (48) durch Einpressen in einen zwischen dem Schaft (34) und der Trägerhülse (46) gebildeten Zwischenraum eingebracht ist, oder/und dass das Isoliermaterial (48) gepresstes Pulvermaterial, vorzugsweise Magnesiumoxid-Material, oder gepresstes Fasermaterial, vorzugsweise Glasfasermatten-Material, umfasst.

8. Abgasheizer nach einem der Ansprüche 1-7, **dadurch gekennzeichnet, dass** die Trägeranordnung (24) zwei in Richtung einer Abgasheizer-Längsachse (L) in Abstand zueinander angeordnete, die Heizleiteranordnung (18) zwischen sich aufnehmende Trägerelemente (20, 22) umfasst, und dass die Heizleiteranordnung (18) vermittels der Verbindungsanordnung (31) in axialem Abstand zu jedem der Trägerelemente (20, 22) an der Trägeranordnung (24) getragen ist.

9. Abgasheizer nach Anspruch 8, **dadurch gekennzeichnet, dass** die Trägerhülse (46) in axialem Abstand zu jedem der Trägerelemente (20, 22) angeordnet ist.

10. Abgasanlage für eine Brennkraftmaschine, umfassend wenigstens einen Abgasheizer (10) nach einem der Ansprüche 1-9.

11. Verfahren zur Herstellung eines Abgasheizers nach einem der vorangehenden Ansprüche, umfassend die Maßnahmen:
a) Bereitstellen wenigstens einer Verbindungselement-Trägerhülse-Baugruppe (54) mit einer einen Schaft (34) eines Verbindungselements (32) unter Zwischenlagerung von Isoliermaterial (48) umgebenden und durch das Isoliermaterial (48) an dem Schaft (34) getragenen Trägerhülse (46),
b) festes Verbinden der Heizleiteranordnung (18) mit der Trägerhülse (46) der wenigstens einen Verbindungselement-Trägerhülse-Baugruppe (54) zum Bereitstellen einer Verbindungsanordnung-Heizleiteranordnung-Baugruppe (56),
c) Verbinden der Verbindungsanordnung-Heizleiteranordnung-Baugruppe (56) mit der Trägeranordnung (24).

12. Verfahren nach Anspruch 11, **dadurch gekennzeichnet, dass** die Maßnahme b) vor der Maßnahme a) durchgeführt wird, oder dass die Maßnahme b) nach der Maßnahme a) durchgeführt wird.

13. Verfahren nach Anspruch 11 oder 12, **dadurch gekennzeichnet, dass** bei der Maßnahme a) das Isoliermaterial (48) in fließfähigem Zustand in einen zwischen dem Schaft (34) und der Trägerhülse (46) gebildeten Zwischenraum eingebracht wird, oder dass bei der Maßnahme a) das Isoliermaterial (48) in den zwischen dem Schaft (34) und der Trägerhülse (46) gebildeten Zwischenraum eingepresst wird.

14. Verfahren nach einem der Ansprüche 11-13, **dadurch gekennzeichnet, dass** bei der Maßnahme b) wenigstens ein Heizleiter (14, 16; 14'), vorzugsweise eine Mehrzahl von Heizleitern (14, 16), durch Materialschluss mit der Trägerhülse (46) fest verbunden wird.

15. Verfahren nach einem der Ansprüche 11-14, **dadurch gekennzeichnet, dass** bei der Maßnahme c) der Schaft (34) der wenigstens einen Verbindungselement-Trägerhülse-Baugruppe (54) in wenigstens einem, vorzugsweise jedem in Richtung einer Abgasheizer-Längsachse (L) gelegenen Endbereich (58, 60) mit einem Trägerelement (20, 22) der Trägeranordnung (24) vorzugsweise durch Verschraubung oder/und Materialschluss verbunden wird.

## Claims

1. An exhaust gas heater for an exhaust gas system of an internal combustion engine, comprising:
- a carrier arrangement (24),
- a heating conductor arrangement (18) which is supported on the carrier arrangement (24) and has at least one current-carrying heating conductor (14, 16; 14'),
- a connecting arrangement (31) for the fixed connection of the heating conductor arrangement (18) to the carrier arrangement (24), the heating conductor arrangement (18) being supported on the carrier arrangement (24) in an electrically insulated manner by means of the connecting arrangement (31),
wherein the connecting arrangement (31) comprises a plurality of connecting elements (32), wherein the heating conductor arrangement (18) is supported on at least one connecting element (32) by means of an insulating carrier unit (44) in an electrically insulated manner with regard to the at least one connecting element (32), wherein the at least one connecting element (32) comprises a shank (34),
**characterized in that** the insulating carrier unit (44) comprises a carrier sleeve (46), which surrounds the shank (34), and comprises insulating material (48) which supports the carrier sleeve on the shank (34), and that the heating conductor arrangement (18) comprises at least one heating conductor (14, 16; 14') which is connected fixedly to at least one carrier sleeve (46).

2. The exhaust gas heater as claimed in claim 1, **characterized in that** the at least one heating conductor (14, 16; 14') is connected fixedly to each carrier sleeve (46) by way of an integrally joined connection, preferably welding or soldering.

3. The exhaust gas heater as claimed in claim 1 or 2, **characterized in that** the heating conductor arrangement (18) comprises a plurality of heating conductors (14, 16) which are arranged at a spacing from one another so as to follow one another in the direction of an exhaust gas heater longitudinal axis (L), and **in that** each heating conductor (14, 16) is connected fixedly to at least one, preferably each, carrier sleeve.

4. The exhaust gas heater as claimed in one of claims 1 to 3, **characterized in that** the insulating material (48) provides an integrally joined connection to the shank (34) and the carrier sleeve (46).

5. The exhaust gas heater as claimed in one of claims 1 to 4, **characterized in that** the insulating material (48) is introduced in a flowable state into an intermediate space which is formed between the shank (34) and the carrier sleeve (46), and/or **in that** the insulating material (48) comprises glass ceramic material.

6. The exhaust gas heater as claimed in one of claims 1 to 3, **characterized in that** the insulating material (48) provides a non-positive connection to the shank (34) and the carrier sleeve.

7. The exhaust gas heater as claimed in one of claims 1 to 3 or 6, **characterized in that** the insulating material (48) is introduced, by way of being pressed in, into an intermediate space which is formed between the shank (34) and the carrier sleeve (46), and/or **in that** the insulating material (48) comprises pressed powder material, preferably magnesium oxide material, or pressed fiber material, preferably glass fiber matting material.

8. The exhaust gas heater as claimed in one of claims 1 to 7, **characterized in that** the carrier arrangement (24) comprises two carrier elements (20, 22) which are arranged at a spacing from one another in the direction of an exhaust gas heater longitudinal axis (L) and receive the heating conductor arrangement (18) between them, and **in that** the heating conductor arrangement (18) is supported on the carrier arrangement (24) by means of the connecting arrangement (31) at an axial spacing from each of the carrier elements (20, 22).

9. The exhaust gas heater as claimed in claim 8, **characterized in that** the carrier sleeve (46) is arranged at an axial spacing from each of the carrier elements (20, 22).

10. An exhaust gas system for an internal combustion engine, comprising at least one exhaust gas heater (10) as claimed in one of claims 1 to 9.

11. A method for producing an exhaust gas heater as claimed in one of the preceding claims, comprising the measures:
a) providing of at least one connecting element/carrier sleeve assembly (54) with a carrier sleeve (46) which surrounds a shank (34) of a connecting element (32), with insulating material (48) mounted in between, and is supported on the shank (34) by way of the insulating material (48),
b) fixedly connecting the heating conductor arrangement (18) to the carrier sleeve (46) of the at least one connecting element/carrier sleeve assembly (54) in order to provide a connecting arrangement/heating conductor arrangement assembly (56),
c) connecting of the connecting arrangement/heating conductor arrangement assembly (56) to the carrier arrangement (24).

12. The method as claimed in claim 11, **characterized in that** measure b) is carried out before measure a), or **in that** measure b) is carried out after measure a).

13. The method as claimed in claim 11 or 12, **characterized in that**, in the case of measure a), the insulating material (48) is introduced in a flowable state into an intermediate space which is formed between the shank (34) and the carrier sleeve (46), or **in that**, in the case of measure a), the insulating material (48) is pressed into the intermediate space which is formed between the shank (34) and the carrier sleeve (46).

14. The method as claimed in one of claims 11 to 13, **characterized in that**, in the case of measure b), at least one heating conductor (14, 16; 14'), preferably a plurality of heating conductors (14, 16), is/are connected fixedly to the carrier sleeve (46) by way of an integrally joined connection.

15. The method as claimed in one of claims 11 to 14, **characterized in that**, in the case of measure c), the shank (34) of the at least one connecting element/carrier sleeve assembly (54) is connected to a carrier element (20, 22) of the carrier arrangement (24), preferably by way of a screw connection and/or an integrally joined connection, in at least one, preferably every, end region (58, 60) which lies in the direction of an exhaust gas heater longitudinal axis (L).

## Revendications

1. Un réchauffeur de gaz d'échappement pour un système de gaz d'échappement d'un moteur à combustion interne, comprenant :
- un agencement de support (24),
- un agencement de conducteur de chauffage (18) supporté par l'agencement de support (24) et comportant au moins un conducteur de chauffage porteur de courant (14, 16 ; 14'),
- un agencement de raccordement (31) pour le raccordement fixe de l'agencement de conducteur de chauffage (18) à l'agencement de support (24), dans lequel l'agencement de conducteur de chauffage (18) est supporté sur l'agencement de support (24) de manière électriquement isolée au moyen de l'agencement de raccordement (31),
dans lequel l'agencement de raccordement (31) comprend une pluralité d'éléments de raccordement (32), dans lequel le dispositif de conducteur de chauffage (18) est supporté sur au moins un élément de raccordement (32) au moyen d'une unité de support isolante (44) d'une manière électriquement isolée par rapport à au moins un élément de raccordement (32), dans lequel ledit au moins un élément de raccordement (32) comprend une tige (34),
**caractérisé en ce que** l'unité de support isolante (44) comprend un manchon de support (46), qui entoure la tige (34), et comprend un matériau isolant (48) qui soutient le manchon de support sur la tige (34), et **en ce que** l'agencement de conducteur de chauffage (18) comprend au moins un conducteur de chauffage (14, 16 ; 14') qui est relié de manière fixe à au moins un manchon de support (46).

2. Le réchauffeur de gaz d'échappement selon la revendication 1, **caractérisé en ce que** ledit au moins un conducteur de chauffage (14, 16 ; 14') est relié de manière fixe à chaque manchon de support (46) au moyen d'un raccordement intégrale, de préférence par soudage ou brasage.

3. Le réchauffeur de gaz d'échappement selon la revendication 1 ou 2, **caractérisé en ce que** l'agencement de conducteur de chauffage (18) comprend une pluralité de conducteurs de chauffage (14, 16) qui sont disposés à une certaine distance les uns des autres de manière à se suivre dans la direction de l'axe longitudinal du réchauffeur de gaz d'échappement (L), et dans lequel chaque conducteur de chauffage (14, 16) est relié de manière fixe à au moins un, de préférence à chaque, manchon de support.

4. Le réchauffeur de gaz d'échappement selon l'une des revendications 1 à 3, **caractérisé en ce que** le matériau isolant (48) assure une liaison intégrale avec la tige (34) et le manchon de support (46).

5. Le réchauffeur de gaz d'échappement selon l'une des revendications 1 à 4, **caractérisé en ce que** le matériau isolant (48) est introduit à l'état fluide dans un espace intermédiaire formé entre la tige (34) et le manchon de support (46), et/ou **en ce que** le matériau isolant (48) comprend un matériau vitrocéramique.

6. Le réchauffeur de gaz d'échappement selon l'une des revendications 1 à 3, **caractérisé en ce que** le matériau isolant (48) fournit un raccordement non positif à la tige (34) et au manchon de support.

7. Le réchauffeur de gaz d'échappement selon l'une des revendications 1 à 3 ou 6, **caractérisé en ce que** le matériau isolant (48) est introduit, par pressage, dans un espace intermédiaire formé entre la tige (34) et le manchon de support (46), et/ou **en ce que** le matériau isolant (48) comprend un matériau en poudre pressé, de préférence un matériau en oxyde de magnésium, ou un matériau en fibre pressé, de préférence un matériau de matage en fibre de verre.

8. Le réchauffeur de gaz d'échappement selon l'une des revendications 1 à 7, **caractérisé en ce que** l'agencement de support (24) comprend deux éléments de support (20, 22) qui sont disposés à une certaine distance l'un de l'autre dans la direction de l'axe longitudinal du réchauffeur de gaz d'échappement (L) et qui reçoivent l'agencement de conducteur de chauffage (18) entre eux, et **en ce que** l'agencement de conducteur de chauffage (18) est supporté sur l'agencement de support (24) au moyen de l'agencement de raccordement (31) à une distance axiale de chacun des éléments de support (20, 22).

9. Le réchauffeur de gaz d'échappement selon la revendication 8, **caractérisé en ce que** le manchon de support (46) est disposé à une distance axiale de chacun des éléments de support (20, 22).

10. Un système de gaz d'échappement pour un moteur à combustion interne, comprenant au moins un réchauffeur de gaz d'échappement (10) selon l'une des revendications 1 à 9.

11. Un procédé de fabrication d'un réchauffeur de gaz d'échappement selon l'une des revendications précédentes, comprenant les mesures suivantes :
a) fournir au moins un ensemble élément de raccordement/manchon de support (54) avec un manchon de support (46) qui entoure une tige (34) d'un élément de raccordement (32), avec un matériau isolant (48) monté entre les deux, et qui est soutenu sur la tige (34) par l'intermédiaire du matériau isolant (48),
b) raccordement fixe de l'agencement de conducteurs de chauffage (18) au manchon de support (46) dudit au moins un ensemble élément de raccordement/manchon de support (54) afin de fournir un ensemble agencement de raccordement/agencement de conducteur de chauffage (56),
c) raccordement de l'ensemble agencement de raccordement/agencement de conducteur de chauffage (56) à l'agencement de support (24).

12. Le procédé selon la revendication 11, **caractérisé en ce que** la mesure b) est effectuée avant la mesure a), ou **en ce que** la mesure b) est effectuée après la mesure a).

13. Le procédé selon la revendication 11 ou 12, **caractérisé en ce que**, dans le cas de la mesure a), le matériau isolant (48) est introduit à l'état fluide dans un espace intermédiaire formé entre la tige (34) et le manchon de support (46), ou **en ce que**, dans le cas de la mesure a), le matériau isolant (48) est pressé dans l'espace intermédiaire formé entre la tige (34) et le manchon de support (46).

14. Le procédé selon l'une des revendications 11 à 13, **caractérisé en ce que**, dans le cas de la mesure b), au moins un conducteur de chauffage (14, 16 ; 14'), de préférence une pluralité de conducteurs de chauffage (14, 16), est/sont relié(s) de manière fixe au manchon de support (46) au moyen d'un raccordement intégral.

15. Le procédé selon l'une des revendications 11 à 14, **caractérisé en ce que**, dans le cas de la mesure c), la tige (34) dudit au moins un ensemble élément de raccordement/manchon de support (54) est reliée à un élément de support (20, 22) de l'agencement de support (24), de préférence par un vissage et/ou un raccordement intégral, dans au moins une, de préférence chaque, zone d'extrémité (58, 60) qui se trouve dans la direction de l'axe longitudinal du réchauffeur de gaz d'échappement (L).
